(19) Europäisches Patentamt
European Patent Office
Office européen des brevets

(11) Veröffentlichungsnummer : **0 229 298 B2**

(12) # NEUE EUROPÄISCHE PATENTSCHRIFT

(45) Veröffentlichungstag der neuen Patentschrift : **23.06.93 Patentblatt 93/25**

(21) Anmeldenummer : **86116991.0**

(22) Anmeldetag : **06.12.86**

(51) Int. Cl.5 : **C08L 77/00,** C08L 25/08, C08L 33/02, C08L 33/08, C08L 33/10, C08L 33/20, C08L 51/04, C08L 55/02

(54) **Thermoplastische Formmassen auf der Basis von Polyamiden und styrolhaltigen Polymeren.**

Die Akte enthält technische Angaben, die nach dem Eingang der Anmeldung eingereicht wurden und die nicht in dieser Patentschrift enthalten sind.

(30) Priorität : **18.12.85 DE 3544761**

(43) Veröffentlichungstag der Anmeldung : **22.07.87 Patentblatt 87/30**

(45) Bekanntmachung des Hinweises auf die Patenterteilung : **13.03.91 Patentblatt 91/11**

(45) Bekanntmachung des Hinweises auf die Entscheidung über den Einspruch : **23.06.93 Patentblatt 93/25**

(84) Benannte Vertragsstaaten : **BE DE FR GB NL**

(56) Entgegenhaltungen :
**EP-A- 0 000 583**
**EP-A- 0 051 471**
**EP-A- 0 058 331**
**EP-A- 0 068 132**
**EP-A- 0 202 214**

(73) Patentinhaber : **BASF Aktiengesellschaft**
**Carl-Bosch-Strasse 38**
**W-6700 Ludwigshafen (DE)**

(72) Erfinder : **McKee, Graham Edmund, Dr.**
**Kastanienweg 8**
**W-6940 Weinheim (DE)**
Erfinder : **Schlemmer, Lothar**
**Duisbergstrasse 1 a**
**W-6701 Maxdorf (DE)**
Erfinder : **Ohlig, Hilmar**
**Friedenstrasse 111**
**W-6750 Kaiserslautern (DE)**
Erfinder : **Taubitz, Christof, Dr.**
**In der Dreispitz 15**
**W-6706 Wachenheim (DE)**

EP 0 229 298 B2

## Beschreibung

Die Erfindung betrifft neue thermoplastische Formmassen auf der Basis von

A) Polyamiden oder kautschukmodifizierten Polyamiden,

$B_1$) Copolymeren des Styrols und/oder substituierten Styrolen mit primären und/oder sekundären Alkylestern der Acrylsäure oder Methacrylsäure mit 1 bis 8 C-Atomen im Alkylrest, Acrylnitril, Methacrylnitril und/oder Maleinsäureimid, wobei die substituierten Styrole durch die allgemeine Formel I dargestellt werden,

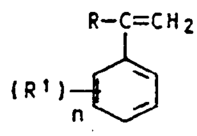

(I)

in der R und $R^1$ gleiche oder verschiedene Alkylreste mit 1 bis 4 C-Atomen, Wasserstoffatome oder Halogenatome darstellen und n den Wert 0, 1, 2 oder 3 hat, und/oder

$B_2$) Kautschukpolymerisaten, auf die Copolymere aus Monomeren wie unter $B_1$) beschrieben aufgepfropft sind,

gekennzeichnet durch einen Gehalt an

C) 0,1 bis 20 Gew.% eines Copolymeren aus

$C_1$) 20 bis 95 Gew.% Styrol und/oder susbtituierten Styrolen der allgemeinen Formel I,

$C_2$) 4 bis 40 Gew.% eines primären und/oder sekundären Alkylesters der Acrylsäure oder Methacrylsäure mit 1 bis 8 C-Atomen im Alkylrest, Acrylnitril und/oder Methacrylnitril,

$C_3$) 1 bis 20 Gew.% t-Butylacrylat, t-Butylmethacrylat.

Außerdem betrifft die Erfindung aus den Formmassen hergestellte Formkörper.

Aus der DE-A-3 120 803 sind Formmassen, bestehend aus Polyamid, Pfropfkautschuken mit Styrol-Acrylnitril (SAN)-Pfropfhüllen und Olefincopolymerisaten mit 2 bis 50 Gew.% Carboxyl- und/oder Carboxylanhydridgruppen bekannt. Als Olefin wird unter anderen auch Styrol genannt. Diese Formmassen weisen jedoch unbefriedigende Kerbschlagzähigkeiten und Zähigkeiten bei biaxialer Beanspruchung (Fallrohrtest) auf.

In der DE-A-3 204 435 werden Formmassen aus Polyamid auf Piperazin-Basis und Acrylnitril-Butadien-Styrol (ABS)-Kunststoffen beschrieben. Die Produkte weisen jedoch eine geringe Wärmeformbeständigkeit und eine ungenügende Beständigkeit gegen organische Lösungsmittel, z.B. Benzin oder Methanol-Toluol-Gemische auf.

In der EP-A-80 720 werden Gemische aus Polyamiden und Styrolpolymeren beschrieben, die ein Styrolpolymeres mit Carbonsäureamidgruppen enthalten.

Aufgabe der vorliegenden Erfindung war es, thermoplastische Formmassen auf der Basis von Polyamiden und Styrolpolymerisaten zur Verfügung zu stellen, die eine gute Wärmeformbeständigkeit und eine hohe Schlagzähigkeit aufweisen.

Erfindungsgemäß wird diese Aufgabe gelöst durch thermoplastische Formmassen auf der Basis von

A) Polyamiden oder kautschukmodifizierten Polyamiden,

$B_1$) Copolymeren des Styrols und/oder substituierten Styrolen mit primären und/oder sekundären Alkylestern der Acrylsäure oder Methacrylsäure mit 1 bis 8 C-Atomen im Alkylrest, Acrylnitril, Methacrylnitril und/oder Maleinsäureimid, wobei die substituierten Styrole durch die allgemeine Formel I dargestellt werden,

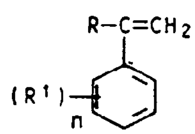

(I)

in der R und $R^1$ gleiche oder verschiedene Alkylreste mit 1 bis 4 C-Atomen, Wasserrstoffatome oder Halogenatome darstellen und n den Wert 0, 1, 2 oder 3 hat,

und/oder

$B_2$) Kautschukpolymerisaten, auf die Copolymere aus Monomeren wie unter $B_1$) beschrieben aufgepfropft sind,

gekennzeichnet durch einen Gehalt an

C) 0,1 bis 20 Gew.% eines Copolymeren aus

$C_1$) 20 bis 95 Gew.% Styrol und/oder substituierten Styrolen der allgemeinen Formel I,

$C_2$) 4 bis 40 Gew.% eines primären und/oder sekundären Alkylesters der Acrylsäure oder Methacrylsäure mit 1 bis 8 C-Atomen im Alkylrest, Acrylnitril und/oder Methacrylnitril,

$C_3$) 1 bis 20 Gew.% t-Butylacrylat, t-Butylmethacrylat.

Die als Komponente (A) verwendbaren Polyamide sind an sich bekannt. Halbkristalline oder amorphe Harze mit einem Molekulargewicht (Gewichtsmittel) von mindestens 5000, wie sie z.B. in den DE-C-20 71 250, 20 71 251, 21 30 523, 21 30 948, 22 41 322, 23 12 966, 25 12 606 und 33 93 210 beschrieben werden, sind bevorzugt.

Beispiele hierfür sind Polyhexamethylenadipinsäureamid, Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Adipinsäure, Isophthalsäure und Hexamethylendiamin genannt.

Die Herstellung dieser Polyamide wird ebenfalls in den vorgenannten Druckschriften beschrieben. Das Verhältnis von endständigen Amingruppen zu endständigen Säuregruppen kann durch Variation des Molverhältnisses der Ausgangsverbindungen gesteuert werden.

Der Anteil des Polyamids an der erfindungsgemäßen Formmasse ist nicht kritisch. Im allgemeinen beträgt er 20 bis 78 Gew.%, bezogen auf die Gesamtmenge der Komponenten A) bis C); diese Grenzen können jedoch auch unter- oder überschritten werden.

Die Komponente $B_1$) wird durch Copolymerisation von Styrol und/oder substituierten Styrolen der allgemeinen Formel I mit primären oder sekundären Acrylsäure- oder Methacrylsäureestern, Acrylnitril, Methacrylnitril oder Maleinsäurederivaten hergestellt. Unter den Acryl- und Methacrylsäureestern werden die Alkylester mit bis zu 8 C-Atomen in der Alkylgruppe bevorzugt, wobei Methylmethacrylat als besonders bevorzugter Ester zu nennen ist. Auch Acrylnitril und Methacrylnitril werden als Comonomere bevorzugt.

Bevorzugte Copolymerisate $B_1$) sind aufgebaut aus 50 bis 95 Gew.% Styrol bzw. substituierten Styrolen der allgemeinen Formel I und 5 bis 50 Gew.% des Comonomeren.

Die Kautschukpolymerisate $B_2$) sind an sich bekannt. Die Pfropfgrundlage, auf die die Mischungen von Styrol oder substituierten Styrolen mit Acrylsäureestern, Methacrylsäureestern, Acrylnitril und/oder Methacrylnitril aufgepfropft sind, sind die üblichen kautschukartigen Polymerisate, wie z.B. Polybutadien, Butadien-Acrylester-Copolymere auf der Basis von Acrylsäurebutyl- und/oder Ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern und Copoly mere aus Ethylen, Propylen und einer Dienkomponente, um nur einige nennen. Die Glasübergangstemperatur der Pfropfgrundlage liegt in der Regel unter -20°C, vorzugsweise unter -40°C (gemessen nach der DSC-Methode, vgl. K.M. Illers, Makromolekulare Chemie 127, 51 (1969)).

Zur Herstellung des Pfropfmischpolymerisats geht man vorzugsweise von 20 bis 80 Gew.%, besonders bevorzugt 55 bis 75 Gew.% der zuvor beschriebenen Pfropfgrundlage und 20 bis 80 Gew.%, vorzugsweise 25 bis 45 Gew.% der Pfropfauflage aus Styrol mit Comonomeren aus. Als Comonomere des Styrols für die Pfropfauflage sind, wie bereits erwähnt, Acrylsäure- und Methacrylsäureester, Acrylnitril und Methacrylnitril zu nennen, wobei Acrylnitril im allgemeinen bevorzugt wird. Der Anteil des Acrylnitrils kann auch teilweise oder vollständig durch einen Acrylsäure- oder Methacrylsäurealkylester, wie z.B. Methylmethacrylat, ersetzt werden. Das Gewichtsverhältnis von Styrol bzw. substituiertem Styrol zum Comonomeren liegt bevorzugt im Bereich von 90:10 bis 65:35, besonders bevorzugt im Bereich von 75:25 bis 70:30.

Die Herstellung der Pfropfmischpolymerisate ist an sich bekannt, z.B. aus den DE-B 24 27 960, 18 11 882, 12 60 135, 12 38 207 und 12 47 021 sowie aus der US-A 3 515 774.

Der Anteil der Komponenten $B_1$) bzw. $B_2$) oder Mischungen derselben an den erfindungsgemäßen Formmassen ist, wie der Anteil des Polyamids, nicht kritisch. Formmassen mit einem Gehalt von 20 bis 78 Gew.% der Komponente $B_1$) oder $B_2$) oder der Mischungen davon werden bevorzugt.

Die Komponente C), die in den erfindungsgemäßen Formmassen zur Verbesserung der Verträglichkeit der Komponenten A) und $B_1$) bzw. $B_2$) eingesetzt wird, ist ein Copolymerisat aus Styrol bzw. substituierten Styrolen der allgemeinen Formel I ($C_1$) mit Monomeren aus der Gruppe der primären bzw. sekundären Acrylsäure- oder Methacrylsäureester, Acrylnitril- und Methacrylnitril ($C_2$) und mindestens einem tertiären Butylester derselben ($C_3$).

Styrol oder $\alpha$-Methylstyrol werden als Monomere $C_1$) bevorzugt, doch eignen sich prinzipiell auch andere

substituierte, insbesondere alkylsubstituierte Styrole, wie z.B. p-Methylstyrol. Mischungen verschiedener Styrole bzw. substituierter Styrole der allgemeinen Formel I sind auch einsetzbar.

Als Monomeres $C_2$) werden Acrylnitril bzw. Methacrylnitril und Acrylsäure-bzw. Methacrylsäurealkylester primärer oder sekundärer Alkohole mit bis zu 8 C-Atomen eingesetzt. Es ist auch möglich und manchmal vorteilhaft, Mischungen dieser Monomere einzusetzen.

Die Ester- gruppen der Monomeren $C_3$) bewirken eine Haftungsvermittlung zwischen den Komponenten A und $B_1$ und/oder $B_2$. Ob bei der Wechselwirkung, die diese Haftungsverbesserung hervorruft, kovalente chemische Bindungen gebildet werden oder ob eine physikalische Wechselwirkung vorliegt, kann bislang nicht mit Sicherheit gesagt werden.

Wesentlich ist in jedem Fall das Vorhandensein der vorgenannten funktionellen Gruppen um die gewunschten Eigenschatten der Formmassen zu erreichen.

Unter den tertiären Estern werden erfindungsgemäß tert.-Butylacrylat und tert.-Butylmethacrylat verstanden.

Die relativen Anteile der Monomeren $C_1$) bis $C_3$) betragen von 20 bis 95 Gew.% $C_1$), 4 bis 40 Gew.% $C_2$) und 1 bis 20 Gew.%. $C_3$). Besonders bevorzugt sind Copolymerisate aus 40 bis 78 Gew.% $C_1$), 20 bis 35 Gew.% $C_2$) und 2 bis 15 Gew.% $C_3$).

Der Anteil der Komponente C) an den erfindungsgemäßen Formmassen beträgt 0,1 bis 20 Gew.%, bezogen auf A) + B) + C), da bei einem Gehalt von weniger als 0,1 Gew.% die gewünschten Effekte der Verträglichkeitsverbesserung nur in geringem Maße erreicht werden, während Anteile von mehr als 20 Gew.% andererseits keine merkliche zusätzliche Verbesserung mehr mit sich bringen.

Aus den vorstehenden Ausführungen geht hervor, daß Formmassen mit einem Gehalt von 20 bis 78 Gew.% A), 20 bis 78 Gew.% B) und 2 bis 20 Gew.% C) besonders bevorzugt sind, wobei das Copolymerisat C) bevorzugt aus Styrol oder $\alpha$-Methylstyrol $C_1$) Acrylnitril oder Methacrylnitril $C_2$) und tert.- Butylacrylat oder tert.-Butylmethacrylat $C_3$) aufgebaut ist.

Gemäß einer bevorzugten Ausführungsform wird als Komponente A) ein kautschukmodifiziertes Polyamid eingesetzt. In diesem Fall enthält die Polyamidphase vorzugsweise bis zu 50 Gew.% eines Kautschuks. Als Beispiele für derartige Kautschuke seien Ethylencopolymere mit (Meth)acrylsäure und/oder Estern der (Meth)acrylsäure mit einem tert. Alkohol und/oder mit Säureanhydriden und gegebenenfalls mit primären und/oder sekundären (Meth)acrylsäureestern sowie Kautschuke, die mit Monomeren gepfropft sind, die eine Reaktion mit Polyamid eingehen können, und Dispersionskautschuke genannt. Beispiele für Kautschuke der zweiten Gruppe, die mit Polyamiden eine Reaktion eingehen können, sind z.B. Ethylen-Propylen-(Dien)-Copolymere, Polybutadien oder Polyisopren, die mit Maleinsäureanhydrid oder Acrylsäure bzw. Methacrylsäure gepfropft sind (vgl. DE-A 27 58 568).

Geeignete Dispersionskautschuke sind beispielsweise Polybutadien, Polyisopren, Polybutylacrylat und Polyethylhexylacrylat, die eine äußere Hülle aus Acrylsäure- oder Methacrylsäurealkylestern besitzen. Diese Monomeren können vorzugsweise mit anderen Monomeren copolymerisiert werden, die als Haftstellen für Polyamid fungieren können. Beispiele hierfür sind wiederum Acrylsäure oder Methacrylsäure oder deren Ester mit einem tertiären Alkohol oder deren Amide. Beispiele für derartige Kautschuke sind in den DE-A 33 13 919, 29 41 025, 30 19 233, 31 05 364 und 27 42 176 beschrieben.

Neben den Komponenten A) bis C) können die erfindungsgemäßen Formmassen Zusatzstoffe und Verarbeitungshilfsmittel enthalten, wie sie für Styrolpolymerisate und Polyamide gebräuchlich sind. Nur beispielsweise seien Füllstoffe, weitere verträgliche Kunststoffe, Farbstoffe, Antistatika, Antioxidantien, Flammschutzmittel und Schmiermittel genannt. Diese Zusätze werden in wirksamen Mengen, im allgemeinen im Bereich von 0,1 bis maximal 50 Gew.%, bezogen auf die Gesamtmenge der Komponenten A) bis C) eingesetzt.

Wie bereits erwähnt, kann, die Herstellung der Komponenten A) bis C) nach bekannten und gebräuchlichen Verfahren erfolgen.

Die Herstellung der erfindungsgemäßen Formmassen erfolgt durch Mischen der Komponenten in an sich bekannter Weise, weshalb sich hier detaillierte Angaben erübrigen. Vorzugsweise wird die Mischung der Komponenten durch gemeinsames Extrudieren, Kneten oder Verwalzen erreicht, wobei die in wäßriger Dispersion erhaltenen Produkte der Pfropfmischpolymerisation direkt oder ganz bzw. teilweise entwässert eingesetzt werden können. In den Fällen, in denen das Produkt aus der Pfropfmischpolymerisation noch wasserhaltig eingesetzt wird, wird das Wasser entlang des Extruders über Entgasungsschnecken abgezogen.

Ein weiterer Aspekt der Erfindung betrifft aus den erfindungsgemäßen Formmassen hergestellte Formteile. Diese zeichnen sich besonders durch eine gute Dimensionsstabilität aus.

Beispiele 1 bis 7

In den folgenden Beispielen wurden die folgenden Komponenten eingesetzt:
Komponente A):

$A_1$: Polycaprolactam mit einer relativen Viskosität von 3,3, gemessen an einer 1 %igen Lösung in konzentrierter Schwefelsäure bei 25°C

$A_2$: Mischpolyamid aus Terephthalsäure (40 Mol.%), Isophthalsäure (60 Mol.%) und Hexamethylendiamin, mit einer relativen Viskosität von 1,70, bestimmt wie bei $A_1$ beschrieben.

Zur Kautschukmodifizierung des Polyamids wurde ein Emulsionspolymerisat aus 65,09 Gewichtsteilen n-Butylacrylat, 0,809 Gewichtsteilen Dihydrodicyclopentadienylacrylat und 0,397 Gewichtsteilen Methacrylsäure durch Emulsionspolymerisation in Waser unter Verwendung von 0,4 Gewichtsteilen Natrium-$C_{12}$-$C_{18}$- Paraffinsulfonat als Emulgator und 0,23 Gewichtsteilen Kaliumpersulfat als Katalysator bei 65°C hergestellt. Das Dihydrodicyclopentadienylacrylat wurde mit einem Teil des n-Butylacrylats gemischt und mit den ersten 60 Gew.% des n-Butylacrylatzulaufs kontinuierlich zudosiert. Die Methacrylsäure wurde mit den letzten 40 Gew.% des n-Butylacrylatzulaufs kontinuierlich zudosiert. Die Teilchengröße betrug 0,3 µm (monodispers) und der Feststoffgehalt etwa 60 %.

Komponenten B):

$B_1$: Copolymer aus Styrol und Acrylnitril (Gewichtsverhältnis 75:25) mit einer Viskositätszahl von 100 ml/g, gemessen an einer 0,5 %igen Lösung in Dimethylformamid (bei 25°C)

$B_1$': Copolymer aus Styrol und Acrylnitril (Gewichtsverhältnis 65:35) mit einer Viskositätszahl von 80 ml/g, gemessen an einer 0,5 %igen Lösung in Dimethylformamid (bei 25°C).

$B_2$: Emulsionspolymerisat aus 68,6 Gewichtsteilen n-Butylacrylat, 1,4 Gewichtsteilen Dihydrocyclopentadienylacrylat, 7,5 Gewichtsteilen Acrylnitril und 22,5 Gewichtsteilen Styrol, hergestellt in Emulsion nach dem Beispiel in der DE-A 1 911 882; Teilchengröße etwa 0,5 µm.

$B_2$': Emulsionspolymerisat aus 28 Gewichtsteilen Styrol, 12 Gewichtsteilen Acrylnitril, 1,15 Gewichtsteilen Ethylacrylat, 0,05 Gewichtsteilen Methacrylamid und 60 Gewichtsteilen Butadien, wobei als erste Stufe das Butadien in Gegenwart von 0,6 Gewichtsteilen tert.-Dodecylmercaptan als Regler polymerisiert wurde (innerer Kern) und als zweite Stufe (äußere Schale) 40 Gewichtsteile Styrol-Acrylnitril (7:3) aufpolymerisiert wurde. Zwischen der ersten und der zweiten Stufe erfolgt eine gezielte Agglomeration der ca. 0,1 µm großen Teilchen durch Zugabe von 2 Gew.% einer Ethylacrylat-Methacrylamid-Copolymerdispersion (2 Gew.% bezogen auf Polybutadien fest).

Komponente C):

Ein Emulsionspolymerisat aus 21,78 Gewichtsteilen Styrol, 7,26 Gewichtsteilen Acrylnitril, 2,33 Gewichtsteilen tert.-Butylacrylat und 0,12 Gewichtsteilen tert.-Dodecylmerkaptan, hergestellt durch Emulsionspolymerisation in 48 Gewichtsteilen Wasser unter Verwendung von 0,38 Gewichtsteilen Natrium-$C_{12}$-$C_{18}$- Paraffinsulfonat als Emulgator und 0,13 Gewichtsteilen Kaliumpersulfat als Katalysator bei 80°C.

Aus den vorstehend genannten Ausgangsverbindungen wurden zunächst folgende Mischungen (Vorprodukte) hergestellt (alle Angaben in Gewichtsprozent):

VP1: 80 % $A_1$ + 20 % modifizierender Kautschuk
VP2: 80 % $B_1$ + 20 % C
VP3: 50 % $B_1$' + 50 % $B_2$
VP4: 80 % VP3 + 20 % C
VP5: 50 % $B_1$' + 50 % $B_2$'
VP6: 80 % VP5 + 20 % C
VP7: 80 % $A_2$ + 20 % modifizierender Kautschuk

Die Herstellung der thermoplastischen Vorprodukte VP1, VP2, VP4, VP6 und VP7 erfolgte in einem Extruder, wobei der Thermoplast am Einzug der Schneckenmaschine zugeführt und in einer ersten Schneckenzone plastifiziert und über eine Knetzone in eine zweite Schneckenzone befördert wurde, in welche die wäßrige Dispersion des jeweiligen in Emulsion hergestellten Polymerisats dosiert zugeführt wurde. Der Thermoplast und das Emulsionspolymere wurden innig miteinander vermischt, wobei im Anschluß an die Knetzone das verdampfte Wasser durch zwei Entgasungsstützen entfernt wurde. Anschließend wurde die Formmasse als Strang ausgepreßt und zerkleinert.

Die Vorprodukte VP3 und VP5 wurden hergestellt, indem die Dispersionen der in Emulsion hergestellten Polymerisate $B_2$ bzw. $B_2$' mit Magnesiumsulfatlösung ausgefällt, gewaschen und geschleudert wurden und als feuchte Krümel mit $B_1$' nach der in DE-A 20 37 784 beschriebenen Methode eingesetzt wurden.

Die Herstellung der Endabmischungen erfolgte durch Mischen der Vorprodukte bzw. der Ausgangsverbindungen in einem Extruder.

Die Kerbschlagzähigkeit wurde nach DIN 53 453, die Bruchenergie mit dem Stoßversuch an einer Rundscheibe mit 2 mm Durchmesser nach DIN 53 443, Blatt 1 und die Reißfestigkeit nach DIN 53 455 bei einer Zuggeschwindigkeit von 50 mm/min bestimmt.

Die Zusammensetzung der Endprodukte sowie die Ergebnisse der Messungen sind in der nachfolgenden Tabelle 1 wiedergegeben.

Tabelle 1 :

| Beispiel | Zusammensetzung (Gew.%) | Bestandteile (Gew.%) A | B | C | K* | Kerbschlag-zähigkeit kJ/m (23°C) | Bruchenergie Nm | Reißfestigkeit N/mm² |
|---|---|---|---|---|---|---|---|---|
| 1 | 50 VP1 + 50 VP2 | 40 $A_1$ | 40 $B_1$ | 10 | 10 | 28 | 46 | 46 |
| 1a⁺ | 55 VP1 + 45 $B_1$ | 45 $A_1$ | 45 $B_1$ | - | 10 | 5 | 0 | 3 |
| 2 | 80 VP1 + 20 VP2 | 64 $A_1$ | 16 $B_1$ | 4 | 16 | 31 | 4 | 69 |
| 2a⁺ | 83 VP1 + 17 $B_1$ | 66 $A_1$ | 17 $B_1$ | - | 17 | 8 | 2 | 8 |
| 3 | 80 VP1 + 20 VP4 | 64 $A_1$ | 8 $B_1'$ + 8 $B_2$ | 4 | 16 | 49 | 54 | 45 |
| 3a⁺ | 83 VP1 + 17 VP3 | 66 $A_1$ | 8,5 $B_1'$ + 8,5 $B_2$ | - | 17 | 8 | 36 | 21 |
| 4 | 50 VP1 + 50 VP4 | 40 $A_1$ | 20 $B_1'$ + 20 $B_2$ | 10 | 10 | 42 | 18 | 44 |
| 4a⁺ | 55 VP1 + 45 VP3 | 45 $A_1$ | 22,5 $B_1'$ + 22,5 $B_2$ | - | 10 | 8 | 12 | 25 |
| 5 | 80 VP1 + 20 VP6 | 64 $A_1$ | 8 $B_1'$ + 8 $B_2'$ | 4 | 16 | 50 | 57 | 43 |
| 5a⁺ | 80 VP1 + 20 VP5 | 66 $A_1$ | 8,5 $B_1'$ + 8,5 $B_2'$ | - | 17 | 7 | 33 | 20 |
| 6 | 80 VP7 + 20 VP4 | 64 $A_2$ | 8 $B_1'$ + 8 $B_2$ | 4 | 16 | 73 | 55 | 57 |
| 6a⁺ | 80 VP7 + 20 VP3 | 64 $A_2$ | 10 $B_1'$ + 10 $B_2$ | - | 16 | 40 | 15 | 45 |

* modifizierender Kautschuk für das eingesetzte Polyamid

⁺ Vergleichsbeispiele

Die Ergebnisse zeigen, daß die erfindungsgemäßen Formmassen herkömmlichen Formmassen (die in den Vergleichsbeispielen hergestellt wurden) hinsichtlich der Kerbschlagzähigkeit, Bruchenergie und Reißfestigkeit deutlich überlegen sind.

## Patentansprüche

**1.** Thermoplastische Formmassen auf der Basis von
A) Polyamiden und/oder kautschukmodifizierten Polyamiden,
$B_1$) Copolymeren des Styrols und/oder substituierten Styrolen mit primären und/oder sekundären Alkylestern der Acrylsäure oder Methacrylsäure mit 1 bis 8 C-Atomen im Alkylrest, Acrylnitril, Methacrylnitril und/oder Maleinsäureimid, wobei die substituierten Styrole durch die allgemeine Formel I dargestellt werden,

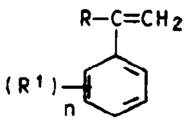

(I)

in der R und $R^1$ Alkylreste mit 1 bis 4 C-Atomen, Wasserstoffatome oder Halogenatome darstellen und n den Wert 0, 1, 2 oder 3 hat,
und/oder
$B_2$) Kautschukpolymerisaten, auf die Copolymere aus Monomeren wie unter $B_1$) beschrieben aufgepfropft sind,
gekennzeichnet durch einen Gehalt an
C) 0,1 bis 20 Gew.% eines Copolymeren aus
$C_1$) 20 bis 95 Gew.% Styrol und/oder substituierten Styrolen der allgemeinen Formel I,
$C_2$) 4 bis 40 Gew.% eines primären und/oder sekundären Alkylesters der Acrylsäure oder Methacrylsäure mit 1 bis 8 C-Atomen im Alkylrest, Acrylnitril und/oder Methacrylnitril,
$C_3$) 1 bis 20 Gew.-% t-Butylacrylat, t-Butylmethacrylat.

**2.** Thermoplastische Formmassen nach Anspruch 1, dadurch gekennzeichnet, daß das Polyamid bis zu 50 Gew.% eines Kautschuks enthält.

**3.** Formkörper, hergestellt aus thermoplastischen Formmassen nach den Ansprüchen 1 und 2.

## Claims

**1.** A thermoplastic molding material based on
A) a polyamide or a rubber-modified polyamide,
$B_1$) a copolymer of styrene or a substituted styrene with a primary or secondary alkyl ester of acrylic acid or methacrylic acid, where alkyl is of 1 to 8 carbon atoms,acrylonitrile,methacrylonitrile or maleimide, the substituted styrene being of the formula I

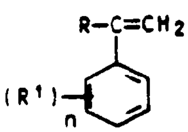

(I)

where R and $R^1$ are each alkyl or 1 to 4 carbon atoms, hydrogen or halogen and n is 0, 1, 2 or 3,
or
$B_2$) a rubber polymer onto which a copolymer of monomers as described under $B_1$ has been grafted, which contains
C) from 0.1 to 20% by weight of a copolymer of
$C_1$) from 20 to 95% by weight of styrene or a substituted styrene of the formula I,

$C_2$) from 4 to 40% by weight of a primary or secondary alkyl ester of acrylic acid or methacrylic acid, where alkyl is of 1 to 8 carbon atoms, acrylonitrile or methacrylonitrile, and
$C_3$ from 1 to 20% by weight of tert.-butyl acrylate or tert.-butyl methacrylate.

**2.** A thermoplastic molding material as claimed in claim 1, wherein the polyamide contains not more than 50% by weight of a rubber.

**3.** A molding produced from a thermoplastic molding material as claimed in claim 1 or 2.

## Revendications

**1.** Matières à mouler thermoplastiques à base
A) de polyamides et/ou de polyamides modifiés par un caoutchouc,
$B_1$) de copolymères du styrène et/ou de styrènes substitués avec des esters alkyliques primaires et/ou secondaires de l'acide acrylique ou de l'acide méthacrylique, dont le radical alkyle contient de 1 à 8 atomes de carbone, de l'acrylonitrile, du méthacrylonitrile et/ou de l'imide de l'acide maléique, où les styrènes substitués sont représentés par la formule générale I qui suit

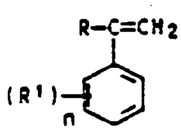 (I)

dans laquelle R et $R^1$ représentent des radicaux alkyle qui comportent de 1 à 4 atomes de carbone, des atomes d'hydrogène ou des atomes d'halogènes et n est égal à 0, 1, 2 ou 3,
et/ou
$B_2$) de polymères de caoutchouc, sur lesquels sont greffés des copolymères de monomères tels que décrit sous $B_1$),
caractérisées en ce qu'elles contiennent
C) de 0,1 à 20% en poids d'un copolymère constitué de
$C_1$) 20 à 95% en poids de styrène et/ou de styrènes substitués de la formule générale I,
$C_2$) 4 à 40% en poids d'un ester alkylique primaire et/ou secondaire de l'acide acrylique ou de l'acide méthacrylique, dont le radical alkyle comporte de 1 à 8 atomes de carbone, d'acrylonitrile et/ou de méthacrylonitrile,
$C_3$) 1 à 20% en poids d'acrylate de t-butyle ou de méthacrylate de t-butyle.

**2.** Matières à mouler thermoplastiques selon la revendication 1, caractérisées en ce que le polyamide contient jusqu'à 50% en poids d'un caoutchouc.

**3.** Articles ou corps moulés, fabriqués à partir de matières à mouler thermoplastiques suivant les revendications 1 et 2.